# EUROPEAN PATENT APPLICATION

(11) **EP 2 660 916 A2**
(43) Date of publication of application: **06.11.2013**
(21) Application number: 11852534.4
(22) Date of filing: 28.12.2011
(51) Int. Cl.: H01M 8/12, H01M 8/24, H01M 8/04

(54) **FUEL CELL SYSTEM AND STACK**

(30) Priority: 28.12.2010 KR 20100137076
(71) Applicant: Posco, Pohang-shi Kyeongsangbuk-do 790-300 (KR)
(72) Inventor: KIM, Seung Goo, Seoul 139-736 (KR); YANG, Choongmo, Pohang-si Gyeongsangbuk-do 791-738 (KR); KIM, Do Hyeong, Pohang-si Gyeongsangbuk-do 790-751 (KR); JUN, Joong Hwan, Pohang-si Gyeongsangbuk-do 790-320 (KR)
(74) Representative: Zech, Stefan Markus
(86) International application number: PCT/KR2011/010256
(87) International publication number: WO 2012/091463

(57) **Abstract**

In order to minimize the temperature gradient formed in the stack without lowering an average temperature of the stack to improve the reliability of the stack and enhance the performance and the life span, provided is a fuel cell system in which a plurality of electricity generating units each including a unit cell in which an anode electrode and a cathode electrode are formed on both sides of an electrolyte film to use an electrochemical reaction of a fuel and an oxidizing agent to generate an electrical energy and a pair of separating plates which are disposed on both surfaces of the unit cell and have passages through which a fuel and an oxidizing agent are supplied to the anode electrode and the cathode electrode are laminated in which the electricity generating unit has a structure where a fuel flowing direction and/or a flowing direction of the fuel or the oxidizing agent are different between neighboring electricity generating units.

## Description

### CROSS-REFERENCE TO RELATED APPLICATION

This application claims priority to and the benefit of Korean Patent Application No. 10-2010-0137076 filed in the Korean Intellectual Property Office on December 28, 2010, the entire contents of which are incorporated herein by reference.

### BACKGROUND OF THE INVENTION

### (a) Field of the Invention

The present invention relates to a fuel cell system, and
more specifically, to a fuel cell system and a stack which are capable of uniformizing internal temperature distribution.

### (b) Description of the Related Art

Generally, a fuel cell is an electric generator system which directly converts a chemical reaction energy of hydrogen and oxygen contained in a hydrocarbon based material or an air containing oxygen into an electric energy.

For example, a solid oxide fuel cell is configured by a structure in which a plurality of electricity generating units including a unit cell which generates an electricity through an oxidation/reduction reaction of hydrogen and oxygen and a separating plate are laminated. The unit cell includes an electrolyte film, a positive electrode (cathode) which is disposed on one surface of the electrolyte film and a negative electrode (anode) which is disposed on the other surface of the electrolyte film.

Therefore, if oxygen is supplied to the positive electrode and hydrogen is supplied to the negative electrode, an oxygen ion which is generated by the reduction reaction of the oxygen at the positive electrode passes through the electrolyte film and moves to the negative electrode, and then reacts with the hydrogen which is supplied to the negative electrode to generate water. In this case, during the process when an electron generated in the negative electrode is transmitted to the positive electrode to be consumed, the electron flows into an external circuit and the unit cell uses the electron flow to generate an electrical energy.

One unit cell and separating plates which are disposed at both sides of the unit cell configure one electricity generating unit. An operating voltage of the electricity generating unit is generally 1.0 V or lower, which is insufficient to be applied to the industry. Therefore, in the fuel cell, in order to raise the voltage, a plurality of electricity generating units is laminated so as to be electrically connected in series to form a stack.

Since the fuel cell having the above structure continuously supplies fuel and air to generate electricity in accordance with the operating principle, a passage is formed in the separating plate in order to uniformly guide the flow of the fluid and the fuel and the air flow along the passage.

A flow of the fuel cell is classified into co-flow, counter flow, and cross flow depending on the flowing direction of the fuel and air which flow along the passage. The co-flow means a flow structure in which the fuel and the air flow in the electricity generating unit in the same direction. The counter flow means a flow structure in which the fuel and the air flow in the electricity generating unit in opposite directions. Further, the cross flow means a flow structure in which the fuel and the air flow in vertical directions to each other.

The electrochemical reaction which occurs in the electricity generating unit of the fuel cell simultaneously converts a part of a chemical energy of a fuel gas into an electrical energy and converts a part of a chemical energy into a thermal energy. In this case, the thermal energy does not uniformly occur on a surface of the electricity generating unitbut an amount of generated thermal energy locally varies in accordance with an operating condition of the electricity generating unitand a gas flowing direction. Further, the thermal energy which is generated as described above tends to be accumulated in a direction where the gas flows by the convection due to the flow of the fluid. Accordingly, a hot spot where the temperature is the highest on one electricity generating unit is formed at an exit of the air on the entire surface of the electricity generating unit and a cold spot where the temperature is the relatively lowest is formed at an inlet of the air. By doing this, in each electricity generating unit which forms the stack, a temperature gradient is formed in the fluid flowing direction. Therefore, in the stack in which the electricity generating units are laminated, in the case of the co-flow manner, the cold spot of the stack is formed in a portion where the fuel and the air are supplied and the hot spot is formed in a portion where the fuel and the air are discharged. Further, in the fuel cell stack of the counter flow manner, the cold spot is formed in a portion where the air is supplied and the hot spot is formed to be leaned toward the center from a portion where the air is discharged by the flow of the air. Furthermore, in the cross flow manner, the cold spot is formed in a portion where the fuel is discharged and the air is supplied and the hot spot is formed to be leaned toward the center from a portion where the fuel is supplied and the air is discharged.

As described above, if the temperature gradient is formed, the temperature of the hot spot in the electricity generating unit needs to be maintained to be lower than a heatproof temperature of not only the electricity generating unit, but also all components which configure the stack, such as a separating plate, a gasket, and a current collector, Therefore, the following problems occur.

First, the electro chemical reaction which occurs in the fuel cell is basically one of chemical reactions so that the higher the temperature, the faster the reaction speed. Therefore, if the temperature of the other parts is lowered in order to manage the temperature of the hot spot of the stack below a predetermined temperature, an average temperature of the stack is lowered so that the reaction speed becomes slower, which lowers the performance of the stack.

Second, as the hot spot temperature of the stack is close to a heatproof temperature of any component, a deterioration speed of the component is accelerated, which may shorten the life span of the stack as a whole.

Third, if the temperature gradient is formed in the stack, a mechanical stress distribution is formed in the stack due to the difference in thermal expansion of each component, which may seriously affect the reliability of the stack such as unexpected destruction of a component or gas leakage.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a fuel cell system and a stack which minimize the temperature gradient formed in the stack without deteriorating an average temperature of the stack to improve the reliability of the stack and enhance the performance and the life span.

An exemplary embodiment of the present invention provides a fuel cell stack in which a plurality of electricity generating units each including a unit cell in which a positive electrode and a negative electrode are formed on both sides of an electrolyte film to use an electrochemical reaction of an oxidizing agent and a fuel to generate an electrical energy and a pair of separating plates which are disposed at both surfaces of the unit cell and have having passages through which a fuel and an oxidizing agent are supplied to the negative electrode and the positive electrode are laminated,
and a fuel flowing direction or a flowing direction of the oxidizing agent may be different between the electricity generating unit and a neighboring electricity generating unit thereof.

The fuel flowing direction and the flowing direction of the oxidizing agent may be different between the electricity generating unitand a neighboring electricity generating unit thereof.

The fuel flowing direction and/or the flowing direction of the oxidizing agent may be opposite to each other between the electricity generating unit and the neighboring electricity generating unit.

The fuel cell stack may have a co-flow structure where the fuel flowing direction on one surface of one electricity generating unit is the same as the flowing direction of the oxidizing agent on the opposite surface.

The fuel cell stack may have a counter flow structure where the fuel flowing direction on one surface of one electricity generating unit is opposite to the flowing direction of the oxidizing agent on the opposite surface.

The fuel cell stack may have a cross flow structure where the fuel flowing direction on one surface of one electricity generating unit is perpendicular to the flowing direction of the oxidizing agent on the opposite surface.

Another exemplary embodiment of the present invention provides a fuel cell system, including a stack which generates an electrical energy by an electrochemical reaction of a fuel and an oxidizing agent; a fuel supplying source which supplies the fuel to the stack; and an oxidizing agent supplying source which supplies the oxidizing agent to the stack,
in the stack, a plurality of electricity generating units, each including a unit cell in which a positive electrode and a negative electrode are formed on both sides of an electrolyte film and a pair of separating plates which are disposed on both surfaces of the unit cell and have passages through which a fuel and an oxidizing agent are supplied to the negative electrode and the positive electrode are laminated, and
a fuel flowing direction or a flowing direction of the oxidizing agent are different between the electricity generating unit and a neighboring electricity generating unit thereof.

Further, the fuel flowing direction and the flowing direction of the oxidizing agent are different between the electricity generating unit and a neighboring electricity generating unit thereof.

The fuel flowing direction and/or the flowing direction of the oxidizing agent may be opposite to each other between neighboring electricity generating units.

The fuel cell stack may have a co-flow structure where the fuel flowing direction on one surface of one electricity generating unit is the same as the flowing direction of the oxidizing agent on the opposite surface.

The fuel cell stack has a counter flow structure where the fuel flowing direction on one surface of one electricity generating unit is opposite to the flowing direction of the oxidizing agent on the opposite surface.

The fuel cell stack may have a counter flow structure where the fuel flowing direction on one surface of one electricity generating unit is opposite to the flowing direction of the oxidizing agent on the opposite surface.

The fuel supplying source may include a fuel tank in which a fuel containing hydrogen is stored and a fuel pump which is connected to the fuel tank.

The fuel supplying source further includes a reformer which is connected to the stack and the fuel tank to be supplied with the fuel from the fuel tank to generate hydrogen gas and supplies the hydrogen gas to an electricity generating unit.

The oxidizing agent supplying source includes an air pump which sucks an air to supply the air to the electricity generator.

According to the exemplary embodiment, the flowing directions of the fuel or the air between neighboring electricity generating units are formed to be different from each other, so that the hot spot formed at the inlet along the flowing direction of the air and the hot spot formed at the outlet are alternately formed along the laminated electricity generating units. Accordingly, the cold spots and the hot spots are alternately disposed to exchange heat so that the temperature gradient of the stack may be minimized.

Further, the temperature of the hot spot of the stack is lowered and the average temperature of the stack is raised to increase an electrochemical reaction speed which occurs in the fuel cell to maximize the performance of the stack.

Further, a phenomenon where a temperature of the stack is locally increased is prevented so as to prevent the life span of the stack from being shortened due to the deterioration.

Furthermore, the temperature gradient of the stack is minimized to enhance the reliability of the stack and improve the performance and the life span.

### BRIEF DESCRIPTION OF THE DRAWINGS

FIG. 1 is a schematic diagram illustrating an entire configuration of a fuel cell system according to the present exemplary embodiment.
FIG. 2 is an exploded perspective view illustrating a configuration of a fuel cell stack according to the present exemplary embodiment.
FIG. 3 is a schematic cross-sectional view illustrating the flow of a fuel and an air between electricity generating units of the fuel cell stack according to the present exemplary embodiment.
FIG. 4 is a schematic cross-sectional view illustrating the flow of a fuel and an air between electricity generating units of the fuel cell stack according to another exemplary embodiment.
FIG. 5 is a graph illustrating a temperature gradient of the fuel cell stack of the exemplary embodiment of FIG. 3 which is compared with a temperature gradient according to the related art.
FIG. 6 is a graph illustrating a temperature gradient of the fuel cell stack of the exemplary embodiment of FIG. 4 which is compared with a temperature gradient according to the related art.

### DETAILED DESCRIPTION OF THE EMBODIMENTS

Hereinafter, the present invention will be described more fully hereinafter with reference to the accompanying drawings, in which exemplary embodiments of the invention are shown. Exemplary embodiments which will be described below will be modified in various different ways without departing from the spirit and the scope of the present invention, but the invention is not limited to the exemplary embodiments described herein.

It should be understood that the drawings are schematically illustrated but are not illustrated according to the exact scales. In addition, the relative size and ratio of each configuration shown in the drawings are arbitrarily illustrated for understanding and ease of description, and the thickness of layers, films, panels, regions, etc., are exaggerated or reduced for clarity. The arbitrary size is not restrictive but illustrative only. Further, the same reference numerals may denote the same structures, elements, or components shown in at least two drawings in order to represent corresponding or similar characteristics of another exemplary embodiment.

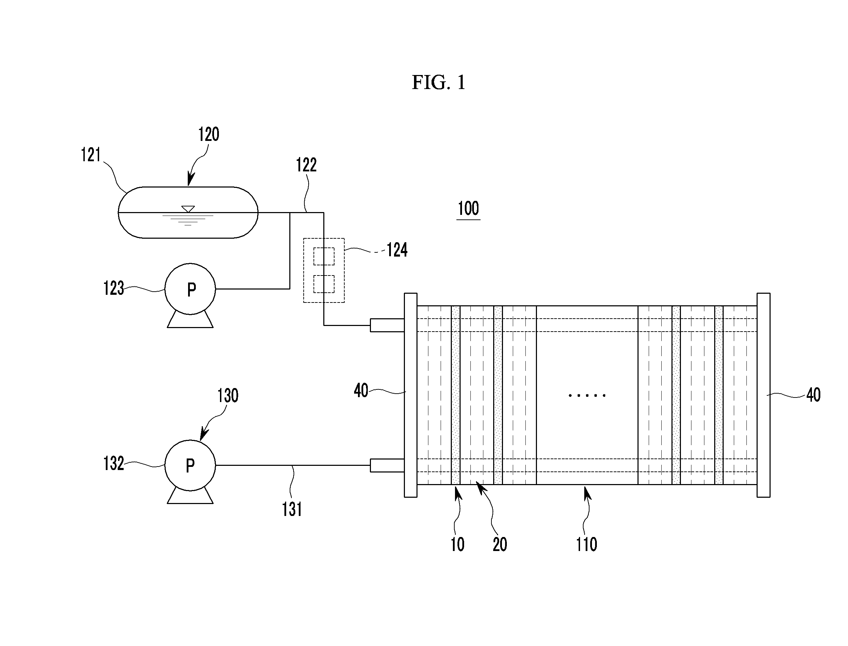

FIG. 1 is a schematic diagram illustrating an entire configuration of a fuel cell system according to the present exemplary embodiment.

Referring to FIG. 1, a fuel cell system 100 according to the present exemplary embodiment is formed in a direct oxidation fuel cell manner in which an electrical energy is generated using a direct electric chemical reaction of a liquid fuel or a gas fuel and an oxidizing agent.

However, the fuel cell system is not limited to the direct oxidation fuel cell, but may be formed in a manner in which the fuel is reformed to generate reformed gas having abundant oxygen and hydrogen and the hydrogen or the reformed gas and the oxidizing agent are electrically and chemically reacted to generate the electrical energy. In this case, the fuel cell system further includes a reformer which reforms the hydrogen.

In the above-mentioned fuel cell system 100, the fuel refers to a hydrocarbon based fuel which exists in a liquefied or gaseous status, such as methane, methanol, ethanol, liquefied natural gas, liquefied petroleum gas, gasoline, and butane gas. Further, the fuel cell system 100 may use an oxygen gas which is stored in a separate storing unit or external air as an oxidizing agent.

The fuel cell system 100 of the present exemplary embodiment includes a fuel cell stack 110 which electrically and chemically reacts the fuel and the oxidizing agent to generate an electrical energy, a fuel supplying unit 120 which supplies the fuel to the fuel cell stack 110, and an oxidizing agent supplying unit 130 which supplies the oxidizing agent to the fuel cell stack 110.

The fuel supplying unit 120 includes a fuel tank 121 which stores liquefied or gaseous fuel, a fuel supplying pipe 122 which connects the fuel tank 121 and the fuel cell stack 110, and a fuel pump 123 which is connected to the fuel tank 121. The fuel pump 123 discharges the fuel which is stored in the fuel tank 121 by a predetermined pumping force to supply the fuel to the fuel cell stack 110 through the fuel supplying pipe 122. In the fuel cell system which reforms the fuel and uses the reformed fuel, the fuel supplying unit further includes a reformer 124 which is supplied with the fuel from the fuel tank to generate a hydrogen gas from the fuel and supplies the hydrogen gas to the stack.

The oxidizing agent supplying unit 130 includes an oxidizing agent supplying pipe 131 which is connected to the fuel cell stack 110 and an oxidizing agent pump 132 which is provided in the oxidizing agent supplying pipe 131. The oxidizing agent may use pure oxide which is stored in a separate storing unit or an external air containing oxygen. The oxidizing agent pump 132 sucks the pure oxygen or the external air by a predetermined pumping force to supply the oxidizing agent to the fuel cell stack 110 through the oxidizing agent supplying pipe 131. In this case, in the oxidizing agent supplying pipe 131, a control valve (not illustrated) may be provided to control an amount of supplied oxidizing agent in order to control a pressure.

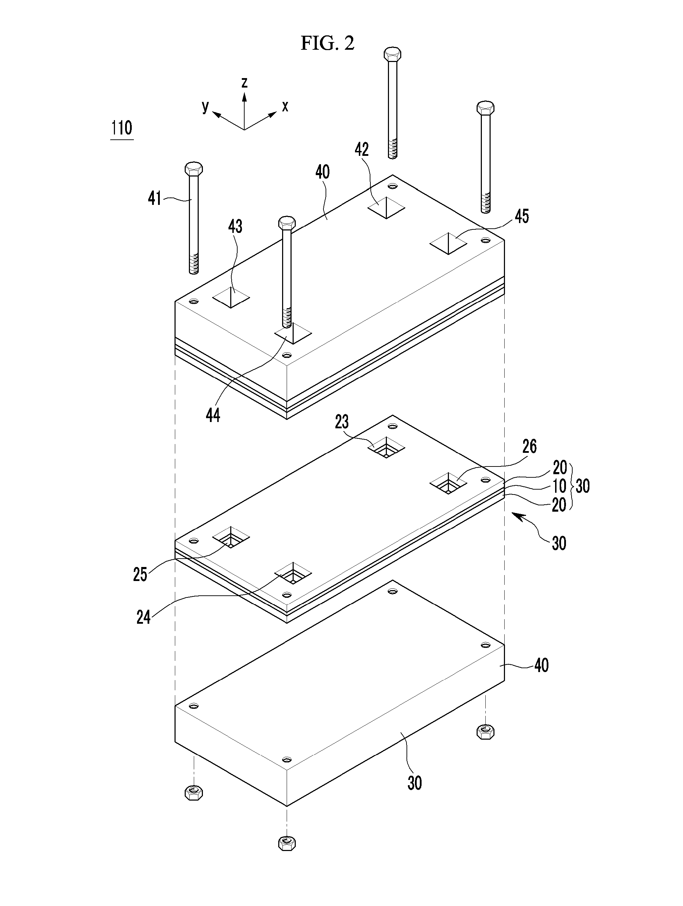

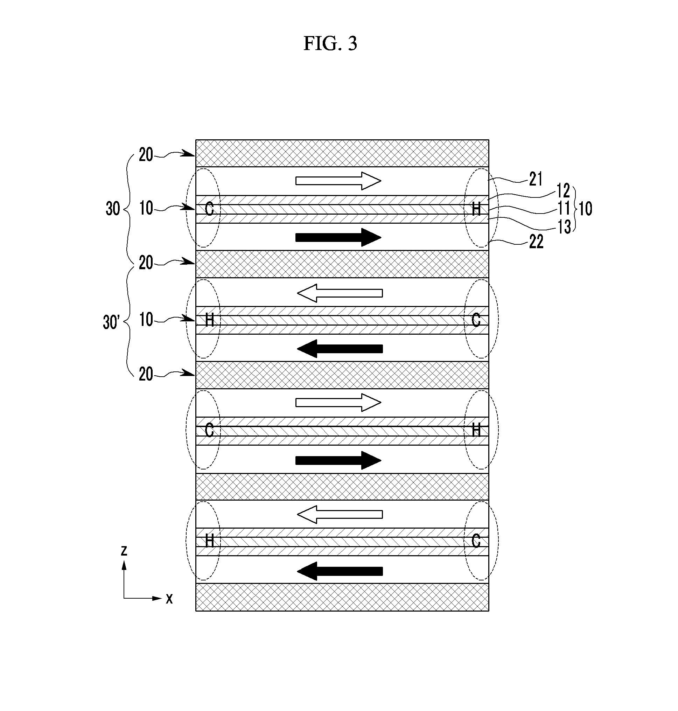

FIG. 2 is an exploded perspective view illustrating a configuration of a fuel cell stack and FIG. 3 schematically illustrates a cross-section of the fuel cell stack.

Referring to FIG. 2, the fuel cell stack 110 includes a plurality of unit cells 10 which are disposed so as to be spaced apart from each other and a plurality of separating plates 20 which is closely disposed to the unit cells 10 between the unit cells 10. One unit cell 10 and a pair of separating plates 20 which is disposed at both sides of the unit cell 10 form one electricity generating unit 30 which generates an electrical energy.

In the present exemplary embodiment, as illustrated in FIG. 2, the separating plate 20, the unit cell 10, and the separating plate 20 are laminated in a Z-axis direction to form the electricity generating unit 30 which generates an electric power.

An end plate 40 is disposed at an outermost portion of the fuel cell stack 110 to support the fuel cell stack 110. The fuel cell stack 110 is firmly assembled by a joint unit, such as a bolt 41, which penetrates the two end plates 40.

At one of the end plates 40, a fuel inlet 42 through which the fuel is supplied to the fuel cell stack 110, an oxidizing agent inlet 43 through which the oxidizing agent is supplied, a fuel outlet 44 through which an unreacted fuel is discharged, and an oxidizing agent outlet 45 through which moisture and unreacted air are discharged may be formed.

Referring to FIG. 2, all of two inlets 42 and 43 and two outlets 44 and 45 are formed in one end plate 40, but the present invention is not limited thereto. For example, a configuration where the fuel inlet and the oxidizing agent inlet are formed in one of the end plates and the fuel outlet and the oxidizing outlet are formed in the other end plate may be allowed.

As illustrated in FIGS. 2 and 3, the unit cell 10 includes an electrolyte film 11, a negative electrode 12 which is disposed at one side of the electrolyte film 11, and a positive electrode 13 which is disposed at the other side of the electrolyte film 11.

The positive electrode 13 is supplied with oxygen through the separating plate 20 and the negative electrode 12 is supplied with hydrogen through the separating plate 20. Therefore, in the unit cell, an oxygen ion which is generated by the reduction reaction of the oxygen at the positive electrode 13 passes through the electrolyte film 11 and moves to the negative electrode 12 and then reacts with hydrogen which is supplied to the negative electrode 12 to generate water. In this case, during the process when an electron generated in the negative electrode 12 is transmitted to the positive electrode 13 to be consumed, the electron flows into an external circuit and the unit cell 10 uses the electron flow to generate an electrical energy.

In the case of the solid oxide fuel cell 100, the electrolyte film 11 is a solid oxide electrolyte film having a thickness of approximately 5 µ m to 200 µ m and has an ion exchanging function which moves the oxide ion generated at the positive electrode 13 to the negative electrode 12. The electrolyte film 11 is not limited to the solid oxide electrolyte, but, for example, may be applied in various forms depending on the types of fuel cells such as a polymer electrolyte.

The separating plate 20 functions as a conductor which connects the negative electrode 12 of the unit cell 10 disposed at one side with the positive electrode 13 of the unit cell 10 disposed at the other side in series.

Further, the separating plate 20 includes a fuel channel 21 which supplies the fuel to one surface facing the negative electrode 12 and an oxidizing agent channel 22 which supplies the oxidizing agent to one surface facing the positive electrode 13. The fuel channel 21 and the oxidizing agent channel 22 are formed in a concave groove shape and may be formed to have various shapes such as a linear structure, a curved line structure, or a zigzag structure.

The separating plate 20 forms the fuel channel 21 and the oxidizing agent channel 22 separately with respect to one unit cell 10 but the fuel channel 21 and the separating plate 20 may be formed to have the same structure with respect to the plurality of unit cells 10 disposed in the Z-axis direction. That is, in the separating plate 20, the fuel channel 21 is formed at one side and the oxidizing agent channel 22 is formed at the other side. For example, the separating plate includes two members which are attached to each other and the fuel channel and the oxidizing agent channel are formed on opposite surfaces of the attached surfaces of the members.

A through hole which is connected to the fuel channel 21 is formed in each of the electricity generating units 30 including the separating plate 20 is formed to supply the fuel. The through hole communicates in the Z-axis direction which is a lamination direction of the electricity generating units to form a fuel supplying manifold 23 which is a conduit line through which the fuel is supplied. The fuel supplying manifold 23 is connected to the fuel inlet 42 which is formed on the end plate 40.

Similarly, a through hole which is connected to the fuel channel 21 to discharge the unreacted fuel which passes through the electricity generating unit 30 is formed in each of the electricity generating units 30. The through hole communicates in the Z-axis direction which is a lamination direction of the electricity generating units 30 to form a fuel discharging manifold 24 which is a conduit line through which the unreacted fuel is discharged. The fuel discharging manifold 24 is connected to the fuel outlet 44 which is formed on the end plate 40.

A through hole which is connected to the oxidizing agent channel 22 is formed in each of the electricity generating units 30 including the separating plate 20 is formed to supply the oxidizing agent. The through hole communicates in the Z-axis direction which is a lamination direction of the electricity generating units 30 to form an oxidizing agent supplying manifold 25 which is a conduit line through which the oxidizing agent is supplied. The oxidizing agent supplying manifold 25 is connected to the oxidizing agent inlet 43 which is formed on the end plate 40.

Similarly, a through hole which is connected to the oxidizing agent channel 22 to discharge the unreacted oxidizing agent which passes through the electricity generating unit 30 is formed in each of the electricity generating units 30. The through hole communicates in the Z-axis direction which is a lamination direction of the electricity generating units 30 to form an oxidizing agent discharging manifold 26 which is a conduit line through which the unreacted oxidizing agent is discharged. The oxidizing agent discharging manifold 26 is connected to the oxidizing agent outlet 45 which is formed on the end plate 40.

Therefore, the fuel flows in the fuel channel 21 of the electricity generating unit 30 through the fuel supplying manifold 23, flows in one direction along the fuel channel and then flows out through the fuel discharging manifold 24. The oxidizing agent also flows in the oxidizing agent channel 22 of the electricity generating unit 30 through the oxidizing agent supplying manifold 25, flows in one direction along the oxidizing agent channel and then flows out through the oxidizing agent discharging manifold 26.

In the meantime, as illustrated in FIG. 3, the fuel cell stack has the co-flow structure where the fuel flowing direction on one surface of one electricity generating unit is the same as the flowing direction of the oxidizing agent on the opposite surface. Further, the fuel flowing directions are different from each other in an electricity generating unit and a neighboring electricity generating unit which are laminated.

Further, the flowing directions of the oxidizing agent are different from each other between one electricity generating unit and the neighboring electricity generating unit thereof. In the present exemplary embodiment, the flowing direction of the fuel and the oxidizing agent are opposite between neighboring electricity generating units, that is, opposite directions.

That is, in FIG. 3, the fuel flowing direction of the uppermost electricity generating unit 30 along the Z-direction is formed from the left to the right along the X-axis. Because the fuel cell stack has the co-flow structure, the flowing direction of the oxidizing agent is also formed from the left to the right along the X-axis in the uppermost electricity generating unit 30.

Further, in a electricity generating unit 30' which is adjacent to the uppermost electricity generating unit 30 and directly below the uppermost electricity generating unit 30, the flowing directions of the fuel and the oxidizing agent are opposite to the flowing directions of the fuel and the oxidizing agent of the uppermost electricity generating unit. That is, the fuel flowing direction is formed from the right to the left along the X-axis and the flowing direction of the oxidizing agent is also formed from the right to the left along the X-axis.

As described above, the fuel flowing directions between neighboring electricity generating units of the stack are opposite directions to each other and the flowing directions of the oxidizing agent between the neighboring electricity generating units of the stack are also opposite directions to each other. Accordingly, the flowing directions of the fuel and the oxidizing agent are alternately changed along the laminated electricity generating units.

Here, as described in the present exemplary embodiment, in order to form the fuel flowing directions between the neighboring electricity generating units to be different from each other, for example, the fuel inlet manifold and the fuel outlet manifold may be separately provided in accordance with the flows. Various structures including the above-mentioned structure may be applied and if the fuel flowing directions between the neighboring electricity generating units are different, it is understood that the structure is included in the spirit of the present invention.

Further, in order to form the flowing directions of the oxidizing agent between the neighboring electricity generating units to be different from each other, for example, the oxidizing agent inlet manifold and the oxidizing agent outlet manifold are separately provided in accordance with the flows. Various structures including the above-mentioned structure may be applied and if the flowing directions of the oxidizing agent between the neighboring electricity generating units are different, it is understood that the structure is included in the spirit of the present invention.

As described above, as the fuel flowing direction and the flowing direction of the oxidizing agent are alternately changed between the neighboring electricity generating units, the hot spot and the cold spot formed in the electricity generating unit are also alternately formed between the electricity generating units.

The thermal energy is accumulated in a direction where the fluid flows out so that in the case of the co-flow structure, the hot spot is formed at the outlet side along the flowing directions of the fuel and the oxidizing agent and the cold spot is formed at the inlet side which is opposite to the outlet.

As illustrated in FIG. 3, the hot spot H is formed at the right on the uppermost electricity generating unit 30 and the cold spot C is formed at the left which is an opposite side to the hot spot. Further, in the electricity generating unit 30' which is adjacent to the uppermost electricity generating unit 30 and is directly below the uppermost electricity generating unit 30, the flowing directions of the fuel and the oxidizing agent are opposite to those of the uppermost electricity generating unit, so that the hot spot H is formed at the left and the cold spot C is formed at the right.

Therefore, in this stack, the hot spots H and the cold spots C are alternately formed in the electricity generating units laminated along the Z-axis. Therefore, the cold spots which are formed in one electricity generating unit which forms the stack and the hot spots of the neighboring electricity generating unit which is adjacent to the one electricity generating unit in a vertical direction along the Z-axis are disposed alternately to exchange heat. The hot spots which are formed in one electricity generating unit and the cold spots of the neighboring electricity generating unit which is adjacent to the one electricity generating unit in a vertical direction along the Z-axis are disposed alternately to exchange heat.

As described above, the cold spots and the hot spots are alternately disposed between electricity generating units of the stack so that the hot spot of the one electricity generating unit is cooled by the cold spot of the neighboring electricity generating unit and the cold spot of the one electricity generating unit is heated by the hot spot of the neighboring electricity generating unit. Therefore, the temperature gradient in the stack may be minimized.

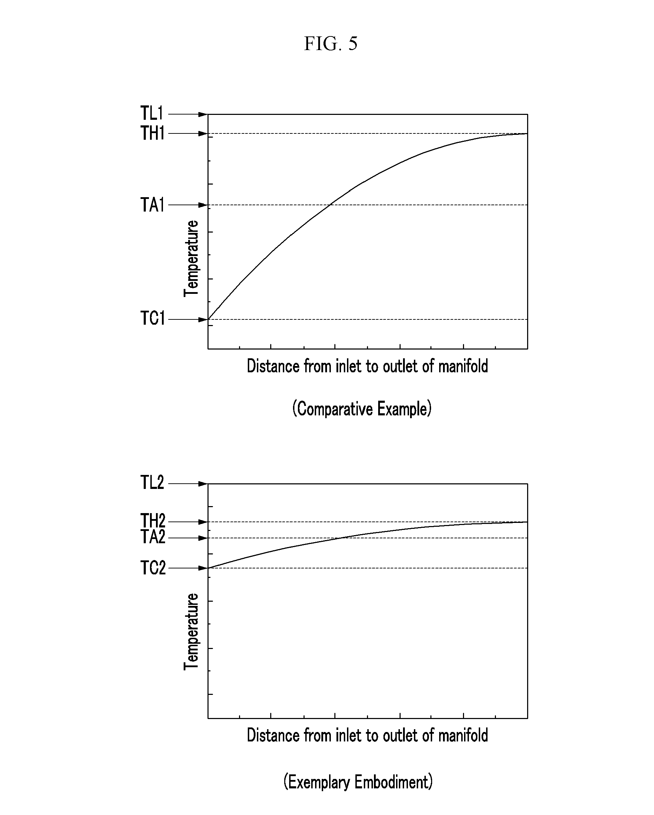

FIG. 5 illustrates the temperature gradient of the stack according to the present exemplary embodiment which is compared with a temperature gradient of the related art. In FIG. 5, a graph of the exemplary embodiment illustrates a temperature gradient of the stack according to the present exemplary embodiment and a graph of a comparative example illustrates a temperature gradient of a stack according to the related art.

The stack of the exemplary embodiment and the stack of the comparative example are formed of the same material and thus threshold temperatures TL1 and TL2 are equal to each other.

As illustrated in FIG. 5, it is known that a temperature of a hot spot TH2 of the stack according to the present exemplary embodiment is maintained to be lower than a temperature of the hot spot TH1 of the stack according to the related art. It is also known that a temperature of a cold spot TC2 of the stack according to the present exemplary embodiment is maintained to be higher than a temperature of the cold spot TC1 of the stack according to the related art.

Accordingly, the stack according to the present exemplary embodiment may increase an average temperature TA2 of the stack as compared with an average temperature TA1 of the stack according to the related art while increasing the temperature of the cold spot and maintaining the temperature of the hot spot at a low temperature.

Therefore, according to the stack of the present exemplary embodiment, it is possible to improve the life span and the reliability of the stack by lowering the temperature of the hot spot and also improve a performance of the stack by increasing the average temperature of the stack.

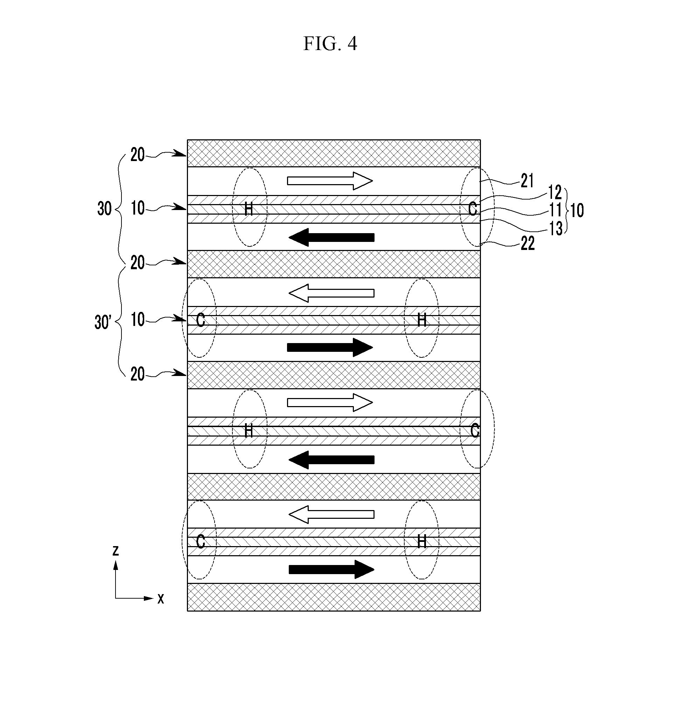

In the mean time, FIG. 4 illustrates a flowing structure of the fuel and the oxidizing agent in a stack having a count flow structure which is a fuel cell stack according to another exemplary embodiment.

As illustrated in FIG. 4, the fuel cell stack has the counter flow structure where the fuel flowing direction on one surface of on electricity generating unit is opposite to the flowing direction of the oxidizing agent on the opposite surface. Further, the fuel flowing directions are different from each other in one electricity generating unit and a neighboring electricity generating unit which are laminated.

Further, the flowing directions of the oxidizing agent are also different from each other between one electricity generating unit and the neighboring electricity generating unit. In the present exemplary embodiment, the flowing directions of the fuel and the oxidizing agent between the neighboring electricity generating units form opposite directions.

That is, in FIG. 4, the fuel flowing direction of the uppermost electricity generating unit 30 along the Z-direction is formed from the left to the right along the X-axis. Because the fuel cell stack has the counter flow structure, the flowing direction of the oxidizing agent is formed from the right to the left along the X-axis in the uppermost electricity generating unit 30, which is opposite to the fuel flowing direction.

Further, in the electricity generating unit 30' which is adjacent to the uppermost electricity generating unit 30 and directly below the uppermost electricity generating unit 30, the flowing directions of the fuel and the oxidizing agent are opposite to the flowing directions of the fuel and the oxidizing agent of the uppermost electricity generating unit 30. That is, the fuel flowing direction is formed from the right to the left along the X-axis and the flowing direction of the oxidizing agent is formed from the left to the right along the X-axis.

As described above, the flowing directions of the fuel and the oxidizing agent between neighboring electricity generating units of the stack are opposite directions to each other. Accordingly, the flowing directions of the fuel and the oxidizing agent between the laminated electricity generating units are alternately changed.

Here, as described in the present exemplary embodiment, in order to form the fuel flowing directions between the neighboring electricity generating units to be different from each other, for example, the fuel inlet manifold and the fuel outlet manifold are separately provided in accordance with the flows. Various structures including the above-mentioned structure may be applied and if the fuel flowing directions between the neighboring electricity generating units are different, it is understood that the structure is included in the spirit of the present invention.

Further, in order to form the flowing directions of the oxidizing agent between the neighboring electricity generating units to be different from each other, for example, the oxidizing agent inlet manifold and the oxidizing agent outlet manifold are separately provided in accordance with the flows. Various structures including the above-mentioned structure may be applied and if the flowing directions of the oxidizing agent between the neighboring electricity generating units are different, it is understood that the structure is included in the spirit of the present invention.

As described above, as the fuel flowing direction and the flowing directions of the oxidizing agent are alternately changed between the neighboring electricity generating units, the hot spot and the cold spot formed in the electricity generating unit are also alternately formed between the electricity generating units.

The thermal energy is accumulated at a side where the fluid flows out and in the count flow structure, the cold spot is formed in a portion where the oxidizing agent is supplied and the hot spot is formed to be leaned toward the center from a portion where the oxidizing agent is discharged by the flow of the oxidizing agent.

As illustrated in FIG. 4, the cold spot C is formed at the right on the uppermost electricity generating unit 30 and the hot spot H is formed to be leaned toward the center from the left which is an opposite side to the cold spot. Further, in the electricity generating unit 30' which is adjacent to the uppermost electricity generating unit 30 and is directly below the uppermost electricity generating unit 30, the flowing directions of the fuel and the oxidizing agent are opposite to those of the uppermost electricity generating unit, so that the cold spot C is formed at the left and the hot spot H is formed to be leaned toward the center from the right.

Therefore, in this stack, the hot spots H and the cold spots C are alternately formed in the electricity generating units laminated along the Z-axis. Therefore, the cold spots which are formed in one electricity generating unit which forms the stack and the hot spots of the neighboring electricity generating unit which is adjacent to the one electricity generating unit in a vertical direction along the Z-axis are disposed alternately to exchange heat. The hot spots which are formed in one electricity generating unit and the cold spots of the neighboring electricity generating unit which is adjacent to the one electricity generating unit in a vertical direction along the Z-axis are disposed alternately to exchange heat.

As described above, the cold spots and the hot spots are alternately disposed between the electricity generating units of the stack so that the hot spot of the one electricity generating unit is cooled by the cold spot of the neighboring electricity generating unit and the cold spot of the one electricity generating unit is heated by the hot spot of the neighboring electricity generating unit. Therefore, the temperature gradient in the stack may be minimized.

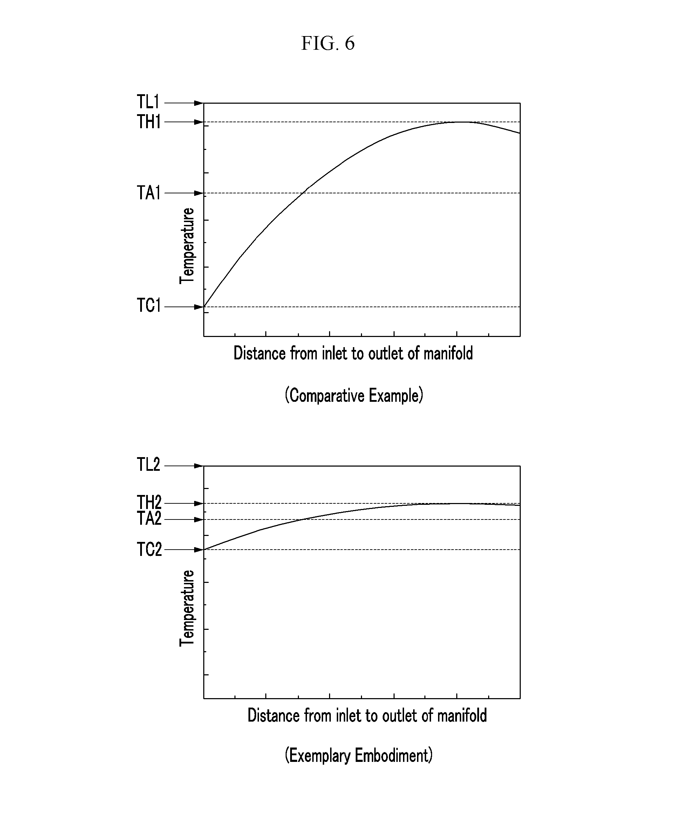

FIG. 6 illustrates the temperature gradient of the stack having the counter flow structure as described above which is compared with the related art. In FIG. 6, a graph of the exemplary embodiment illustrates a temperature gradient of the stack according to the present exemplary embodiment and a graph of a comparative example illustrates a temperature gradient of a stack according to the related art.

The stack of the exemplary embodiment and the stack of the comparative example are formed of the same material and thus threshold temperatures TL1 and TL2 are equal to each other.

As illustrated in FIG. 6, it is known that a temperature of a hot spot TH2 of the stack according to the present exemplary embodiment is maintained to be lower than a temperature of the hot spot TH1 of the stack according to the related art. It is also known that a temperature of a cold spot TC2 of the stack according to the present exemplary embodiment is maintained to be higher than a temperature of the cold spot TC1 of the stack according to the related art.

Accordingly, the stack according to the present exemplary embodiment may increase an average temperature TA2 of the stack as compared with an average temperature TA1 of the stack according to the related art while increasing the temperature of the cold spot and maintaining the temperature of the hot spot at a low temperature.

Therefore, according to the stack of the present exemplary embodiment, it is possible to improve the life span and the reliability of the stack by lowering the temperature of the hot spot and also improve a performance of the stack by increasing the average temperature of the stack.

As described above, even though exemplary embodiments of the present invention have been described with reference to the drawings, various modifications and other exemplary embodiments may be performed by those skilled in the art. The modifications and other exemplary embodiments are considered and included in the accompanying claims to be within the scope of the present invention.

### <Description of symbols>

| | | | |
|---|---|---|---|
| 10 : | Unit cell | 20 : | Separating plate |
| 21 : | Fuel channel | 22 : | Oxidizing agent channel |
| 30,30' : | Electricity generating unit | | |
| H : | Hot spot | C : | Cold spot |

## Claims

1. A fuel cell stack in which a plurality of electricity generating units each including a unit cell in which a positive electrode and a negative electrode are formed on both sides of an electrolyte film to use an electrochemical reaction of an oxidizing agent and a fuel to generate an electrical energy and a pair of separating plates which are disposed at both surfaces of the unit cell and have having passages through which a fuel and an oxidizing agent are supplied to the negative electrode and the positive electrode are laminated,
wherein a fuel flowing direction and/or a flowing direction of the oxidizing agent are different between the electricity generating unit and a neighboring electricity generating unit thereof.

2. The fuel cell stack of claim 1, wherein:
the fuel flowing direction and/or the flowing direction of the oxidizing agent are opposite to each other between the electricity generating unit and the neighboring electricity generating unit.

3. The fuel cell stack of claim 1 or claim 2, wherein:
the fuel cell stack has a co-flow structure where the fuel flowing direction on one surface of one electricity generating unit is the same as the flowing direction of the oxidizing agent on the opposite surface.

4. The fuel cell stack of claim 1 or claim 2, wherein:
the fuel cell stack has a counter flow structure where the fuel flowing direction on one surface of one electricity generating unit is opposite to the flowing direction of the oxidizing agent on the opposite surface.

5. The fuel cell stack of claim 1 or claim 2, wherein:
the fuel cell stack has a cross flow structure where the fuel flowing direction on one surface of one electricity generating unit is perpendicular to the flowing direction of the oxidizing agent on the opposite surface.

6. A fuel cell system, comprising:
a stack which generates an electrical energy by an electrochemical reaction of a fuel and an oxidizing agent;
a fuel supplying source which supplies the fuel to the stack; and
an oxidizing agent supplying source which supplies the oxidizing agent to the stack,
wherein in the stack, a plurality of electricity generating units each including a unit cell in which a positive electrode and a negative electrode are formed on both sides of an electrolyte film and a pair of separating plates which are disposed on both surfaces of the unit cell and have passages through which a fuel and an oxidizing agent are supplied to the negative electrode and the positive electrode are laminated, and
a fuel flowing direction and/or a flowing direction of the oxidizing agent are different between the electricity generating unit and a neighboring electricity generating unit thereof.

7. The fuel cell system of claim 6, wherein:
the fuel flowing direction and/or the flowing direction of the oxidizing agent are opposite to each other between neighboring electricity generating unit.

8. The fuel cell system of claim 6 or claim 7, wherein:
the stack has a co-flow structure where the fuel flowing direction on one surface of one electricity generating unit is the same as the flowing direction of the oxidizing agent on the opposite surface.

9. The fuel cell system of claim 6 or claim 7, wherein:
the stack has a counter flow structure where the fuel flowing direction on one surface of one electricity generating unit is opposite to the flowing direction of the oxidizing agent on the opposite surface.

10. The fuel cell system of claim 6 or claim 7, wherein:
the stack has a cross flow structure where the fuel flowing direction on one surface of one electricity generating unit is perpendicular to the flowing direction of the oxidizing agent on the opposite surface.

11. The fuel cell system of claim 6, wherein:
the fuel supplying source includes a fuel tank in which a fuel containing hydrogen is stored and a fuel pump which is connected to the fuel tank.

12. The fuel cell system of claim 11, wherein:
the fuel supplying source further includes a reformer which is connected to the stack and the fuel tank to be supplied with the fuel from the fuel tank to generate hydrogen gas and supplies the hydrogen gas to an electricity generating unit.

13. The fuel cell system of claim 6, wherein:
the oxidizing agent supplying source includes an air pump which sucks an air to supply the air to the electricity generator.
